# EUROPÄISCHE PATENTSCHRIFT

(11) **EP 1 229 297 B1**
(45) Veröffentlichungstag und Bekanntmachung des Hinweises auf die Patenterteilung: **26.11.2008**
(21) Anmeldenummer: 01128677.0
(22) Anmeldetag: 01.12.2001
(51) Int. Cl.: F28F 13/12, F28F 27/02, F28D 1/03, F01N 3/05

(54) **Abgaskühler, insbesondere für Brennkraftmaschinen, die vorzugsweise in Kraftfahrzeugen angeordnet sind**
Exhaust gas cooler, more especially for engines in automotive vehicles
Refroidisseur de gaz d'échappements, en particulier pour moteurs de véhicules automobiles

(30) Priorität: 01.02.2001 DE 10104835
(43) Veröffentlichungstag der Anmeldung: 07.08.2002
(73) Patentinhaber: J. Eberspächer GmbH & Co. KG, 73730 Esslingen (DE)
(72) Erfinder: Wörner, Siegfried, 73734 Esslingen (DE)

(56) Entgegenhaltungen:
- DE-U- 29 708 011
- US-A- 6 141 961

## Beschreibung

Die Erfindung betrifft einen Abgaskühler, insbesondere für Brennkraftmaschinen, die vorzugsweise in Kraftfahrzeugen angeordnet sind wie im Oberbegriff des Anspruchs 1 definiert ist. Ein derartiger Abgaskühler ist zum Beispiel in US-A-6141961 beschrieben.

In einem Abgasstrang einer Brennkraftmaschine, vorzugsweise eines Kraftfahrzeugs, sind Abgasreinigungselemente enthalten, wie z.B. Katalysator und/oder NOₓ-Speicher. Um die ordnungsgemäße Funktion derartiger Abgasreinigungselemente gewährleisten zu können, kann es bei bestimmten Abgasreinigungselementen, z.B. bei einem NOₓ-Speicher, erforderlich sein, ein vorgegebenes Temperaturfenster, z.B. 250° C bis 550° C, und gegebenenfalls eine maximal zulässige Temperatur von z.B. 800° C in den Abgasen einzuhalten. Um eine Überhitzung der temperaturempfindlichen Abgasreinigungselemente zu vermeiden, werden Abgaskühler der eingangs genannten Art verwendet. Durch den Abgaskühler wird ein Teil der Wärmeenergie, der den Abgaskühler durchströmenden Abgase abgeleitet, insbesondere in die Umgebung. Hierbei besteht jedoch das Problem, bei einem Kaltstart der Brennkraftmaschine möglichst rasch eine Mindestabgastemperatur (z.B. die untere Temperatur des vorgenannten Temperaturfensters von etwa 250° C) zu erreichen, um auch im Warmlaufbetrieb der Brennkraftmaschine geringe Schadstoffemission gewährleisten zu können.

Aus der WO 99/60255 ist es bekannt, einen Abgaskühler in einem Abgasstrang einer Brennkraftmaschine einzubauen, wobei außerdem eine den Wärmetauscher umgehende Bypass-Leitung vorgesehen ist. Mit einem steuerbaren Ventil kann die Abgasmenge, welche den Abgaskühler bzw. den Bypass durchströmt, geregelt werden. Dementsprechend läßt sich die Abgastemperatur stromauf einer Katalysatoreinrichtung regeln. Eine derartige Anordnung besitzt jedoch einen relativ aufwendigen Aufbau.

Aus der EP 1 031 708 A1 ist eine Kombination aus einem Speicher-Katalysator und einem Kühlmodul bekannt, wobei das Kühlmodul aus einem Rohrbündel mit einem Eingangskonus und einem Ausgangskonus besteht. Der Ausgangskonus des Kühlmoduls ist in den Eingangskonus des Katalysators integriert, wodurch sich eine kompakte Bauweise ergibt. Diese bekannte integrale Kombination eines Katalysators mit einem Kühlmodul besitzt jedoch den Nachteil, daß das Kühlmodul stets mit voller Kühlleistung arbeitet, mit der Folge, daß im Warmlaufbetrieb der Brennkraftmaschine die Mindesttemperatur des Katalysators nur relativ langsam erreichbar ist.

Die vorliegende Erfindung beschäftigt sich mit dem Problem, für einen Abgaskühler der eingangs genannten Art eine Ausführungsform anzugeben, die einen besonders kompakten Aufbau besitzt. Darüber hinaus soll der Abgaskühler einfach herstellbar sein.

Dieses Problem wird durch einen Abgaskühler mit den Merkmalen des Anspruchs 1 gelöst.

Die Erfindung beruht auf dem allgemeinen Gedanken, in einem Gehäuse zwei Kammern auszubilden, die sich in der Anströmrichtung bzw. in der Abströmrichtung des Abgases erstrecken und die über mindestens eine Überströmöffnung miteinander kommunizieren, wobei die in die erste Kammer eingeleiteten Abgase quer zu ihrer Anströmrichtung durch die mindestens eine Überströmöffnung in die zweite Kammer umgelenkt werden, von dieser aus dem Gehäuse in Ausströmungsrichtung ausströmen, wozu erneut eine Umlenkung erforderlich ist. Durch die relativ starke Strömungsumlenkung im Gehäuse ergibt sich ein relativ intensiver Wärmeübergang vom Abgas an das Gehäuse. Da die beiden Kammern direkt aneinanderliegen und eine gemeinsame Trennwand besitzen, baut der erfindungsgemäße Abgaskühler sehr kompakt. Desweiteren besitzt der erfindungsgemäße Abgaskühler einen einfach herstellbaren Aufbau.

Eine besonders vorteilhafte Ausführungsform ergibt sich dann, wenn im Auslaß eine Umschalteinrichtung angeordnet ist, die zwischen einer ersten Stellung, in welcher der Auslaß mit der zweiten Kammer kommuniziert, und einer zweiten Stellung verstellbar ist, in welcher der Auslaß mit der ersten Kammer kommuniziert. Bei dieser Ausführungsform ist der Abgaskühler zwischen zwei Kühlleistungsstufen verstellbar.

In der ersten Stellung der Umschalteinrichtung strömen die Abgase in die erste Kammer ein und aus der zweiten Kammer aus. Hierdurch ergibt sich die obengenannte intensive Kühlungswirkung. In der zweiten Stellung der Umschalteinrichtung strömen die Abgase in die erste Kammer ein und auch aus der ersten Kammer wieder aus, wobei sich im wesentlichen eine Durchströmung der ersten Kammer ausbildet. Die dabei erzielbare Kühlleistung ist vergleichsweise gering, so daß sich diese vorteilhafte Ausführungsform in besonderer Weise dazu eignet, während einer Warmlaufphase einer Brennkraftmaschine möglichst rasch eine vorbestimmte Mindesttemperatur in einem Abgasreinigungselement, z.B. NOₓ-Speicher, zu erreichen. Im Warmlaufbetrieb wird die Umschalteinrichtung in ihre zweite Stellung verstellt, in welcher der Abgaskühler seine geringere Kühlleistung entfaltet. Im Normalbetrieb kann dann die erste Stellung der Umschalteinrichtung eingestellt werden, in welcher der Abgaskühler seine maximale Kühlleistung entfaltet.

Bei einer zweckmäßigen Weiterbildung kann die Umschalteinrichtung auch so ausgebildet sein, daß wenigstens eine Zwischenstellung einstellbar ist, in welcher der Auslaß mit beiden Kammern mehr oder weniger stark kommuniziert. Bei dieser Weiterbildung kann die Kühlleistung des Abgaskühlers zwischen seiner minimalen Kühlleistung, die sich in der zweiten Stellung der Umschalteinrichtung ergibt, und seiner maximalen Kühlleistung eingestellt werden, die sich in der ersten Stellung der Umschalteinrichtung ergibt. Zweckmäßig ist hierbei eine stufenlose oder relativ feinstufige Verstellbarkeit.

Bei einer zweckmäßigen Ausgestaltung können beide Kammern mit ihren Auslaßenden im oder am Auslaß offen enden, wobei die Umschalteinrichtung dann eine Klappenanordnung aufweist, welche in der ersten Stellung der Umschalteinrichtung das Auslaßende der ersten Kammer schließt und in der zweiten Stellung der Umschalteinrichtung das Auslaßende der zweiten Kammer schließt. Diese Ausführungsform zeichnet sich durch ihren einfachen Aufbau aus und ist somit einfach und preiswert herstellbar.

Bei einer besonders preiswerten Ausführungsform können das Gehäuse aus einer Oberschale, einer Unterschale und einer die Trennwand bildenden Innenschale zusammengebaut sein. Für diesen Zusammenbau eigenen sich beispielsweise Falzverfahren mit Bördelverbindungen oder Schweißverfahren, vorzugsweise Laser-Schweißverfahren.

Die Kühlleistung des Abgaskühlers kann beispielsweise dadurch verbessert werden, daß im Gehäuse mehrere, in Längsrichtung verlaufende Kanäle ausgebildet sind, wobei die Trennwand in jedem der Kanäle einem ersten Teilkanal von einem zweiten Teilkanal trennt, wobei die Trennwand in jedem der Kanäle mindestens eine Überströmöffnung aufweist, durch welche die Teilkanäle des jeweiligen Kanals miteinander kommunizieren, und wobei die ersten Teilkanäle die erste Kammer und die zweiten Teilkanäle die zweite Kammer bilden. Durch diese Mehrkanalbauweise steht mehr Oberfläche für einen Wärmeübergang zur Verfügung, wodurch einerseits bei gleichbleibender Baulänge die Kühlleistung erhöht und andererseits bei gleichbleibender Kühlleistung die Baulänge reduziert werden kann. Desweiteren kann durch die Anzahl der Kanäle die Kühlleistung des Abgaskühlers an unterschiedliche Anforderungen angepaßt werden.

Von besonderem Vorteil ist eine Ausführungsform, bei der sehr viele Überströmöffnungen mit relativ kleinen Querschnitten vorgesehen sind, so daß eine Vielzahl von solchen Überströmöffnungen durch eine Perforation der Trennwand oder mindestens eines Trennwandabschnittes gebildet ist. Auf diese Weise ergibt sich eine intensive Durchmischung, Verwirbelung und Turbulenz in der Abgasströmung wodurch der Wärmeübergang an die Wandungen verbessert ist. Desweiteren hat sich gezeigt, daß mit Hilfe einer solchen Perforation eine mehr oder weniger starke Schalldämpfungswirkung erzielbar ist, wodurch der erfindungsgemäße Abgaskühler außerdem als Schalldämpfer wirksam ist.

Bei einer anderen besonderen Ausführungsform kann die Trennwand in einem Einlaßbereich und in einem Auslaßbereich jeweils über eine Schiebesitzlagerung am Gehäuse gelagert sein, wobei die Trennwand in einem zwischen Einlaßbereich und Auslaßbereich angeordneten Mittelbereich fest mit dem Gehäuse verbunden ist. Durch diese besondere Bauweise ergibt sich im Einlaßbereich und Auslaßbereich eine Entkopplung der Trennwand vom Gehäuse, so daß Wärmeausdehnungseffekte reduziert bzw. kompensiert werden.

Die Kühlwirkung des Abgaskühlers kann bei einer Weiterbildung dadurch verbessert werden, daß die Querschnitte der Kammern jeweils größer sind als der Querschnitt des Einlaßes und als der Querschnitt des Auslaßes. Durch diese Maßnahme ergibt sich innerhalb des Gehäuses eine Entspannung bzw. eine Reduzierung der Strömungsgeschwindigkeit. Hierdurch kann die Wärmeübertragung zwischen Abgas und Gehäuse verbessert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch einen erfindungsgemäßen Abgaskühler bei einer ersten Ausführungsform,
- Fig. 2: eine Ansicht wie in Fig. 1, jedoch bei einer zweiten Ausführungsform,
- Fig. 3: einen Längsschnitt durch einen Auslaßbereich des erfindungsgemäßen Abgaskühlers, jedoch bei einer dritten Ausführungsform in einem ersten Betriebszustand,
- Fig. 4: eine Ansicht wie in Fig. 3, jedoch in einem zweiten Betriebszustand,
- Fig. 5: einen Querschnitt durch eine besondere Ausführungsform eines Abgaskühlers nach der Erfindung,
- Fig. 6: eine Ansicht wie in Fig. 5, jedoch bei einer anderen Ausführungsform,
- Fig. 7: eine Ansicht von oben bei entfernter Oberschale auf eine besondere Ausführungsform des erfindungsgemäßen Abgaskühlers.

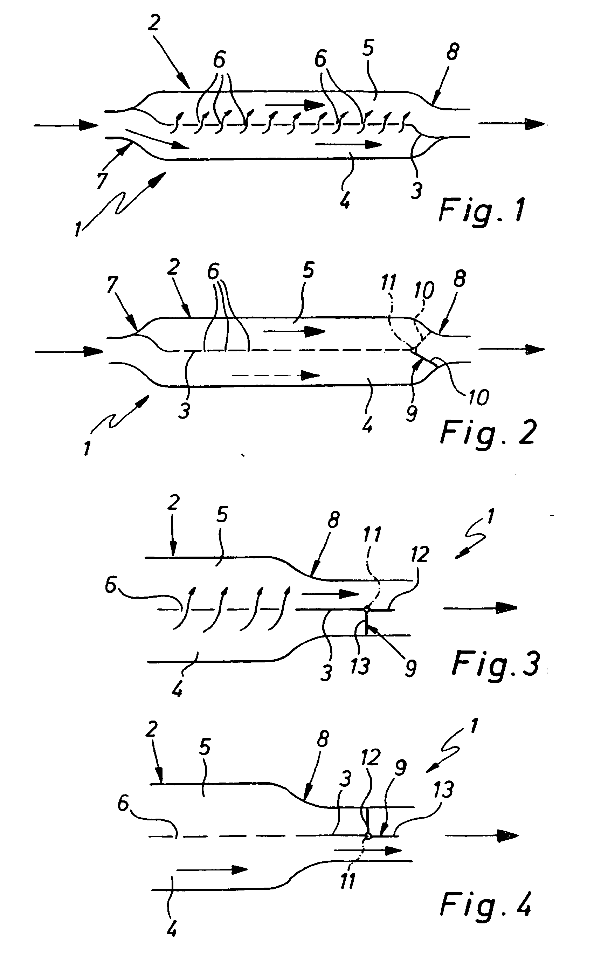

Entsprechend Fig. 1 weist ein erfindungsgemäßer Abgaskühler 1 ein Gehäuse 2 auf, das in seiner Längsrichtung von Abgas durchströmbar ist. Die Abgasdurchströmung des Gehäuses 2 ist hierbei mit Pfeilen symbolisiert. Im Gehäuse 2 trennt eine Trennwand 3, die sich in Längsrichtung des Gehäuses 2 erstreckt, eine erste Kammer 4 von einer zweiten Kammer 5. Dabei besitzt die Trennwand 3 eine Vielzahl von Überströmöffnungen 6, die relativ kleine Querschnitte aufweisen und durch welche die beiden Kammer 4 und 5 miteinander kommunizieren. Der Abgaskühler 1 weist außerdem einen Einlaß 7 auf, der im Gehäuse 2 mit der ersten Kammer 4 kommuniziert. Durch den Einlaß 7 tritt die Abgasströmung in das Gehäuse 2 bzw. in die erste Kammer 4 ein. Desweiteren weist der Abgaskühler 1 einen Ausgang 8 auf, der im Gehäuse 2 mit der zweiten Kammer 5 kommuniziert, so daß durch den Ausgang 8 die Abgasströmung aus dem Gehäuse 2 bzw. aus der zweiten Kammer 5 austritt.

Die durch den Einlaß 7 in das Gehäuse 2 eintretende Abgasströmung wird durch das geschlossene Auslaßende der zweiten Kammer 4 gezwungen, durch die Überströmöffnungen 6 in die zweite Kammer 5 überzuströmen. Hierbei ergibt sich eine doppelte Querumlenkung der Abgasströmung mit entsprechender Verwirbelung und Wärmeübertragung an die Trennwand 3 sowie an das Gehäuse 2. Das gekühlte Abgas tritt durch den Auslaß 8 aus der zweiten Kammer 5 bzw. aus dem Gehäuse 2 aus. Bei einer großen Anzahl von Überströmöffnungen 6 können diese durch eine Perforation der Trennwand 3 oder eines entsprechenden Trennwandabschnittes gebildet sein. Die Querschnitte der Überströmöffnungen 6 sind klein im Vergleich zu den Querschnitten der Kammern 4 und 5, so daß an den Überströmöffnungen 6 eine Drosselwirkung entsteht. Hierdurch kann der Abgaskühler 1 zusätzlich eine Schalldämpfungswirkung entfalten.

Entsprechend Fig. 2 kann bei einer bevorzugten Ausführungsform im Auslaß 8 bzw. in einem Auslaßbereich eine Umschalteinrichtung 9 angeordnet sein, die hier eine Klappe 10 aufweist. Diese Klappe 10 ist um eine senkrecht zur Abgasströmung verlaufende, hier senkrecht auf der Zeichnungsebene stehende Schwenkachse 11 schwenkverstellbar gelagert. Mittels entsprechender, nicht dargestellter Stellmittel ist die Umschalteinrichtung 9 bzw. deren Klappe 10 zwischen einer mit durchgezogener Linie gezeigten ersten Stellung und einer mit unterbrochener Linie gezeigten zweiten Stellung verstellbar. In der ersten Stellung der Umschalteinrichtung 9 bzw. der Klappe 10 sperrt die Klappe 10 das Auslaßende der ersten Kammer 4 und gibt das Auslaßende der zweiten Kammer 5 frei, so daß der Auslaß 8 in der ersten Stellung mit der zweiten Kammer 5 kommuniziert. In der ersten Stellung ergibt sich derselbe Strömungsverlauf wie bei der Ausführungsform gemäß Fig. 1, das bedeutet, daß die Abgase durch den Einlaß 7 in die erste Kammer 4 einströmen, über die Überströmöffnungen 6 in die zweite Kammer 5 übertreten und von der zweiten Kammer 5 durch den Auslaß 8 austreten.

In der zweiten Stellung der Umschalteinrichtung 9 bzw. der Klappe 10 sperrt die Klappe 10 das Auslaßende der zweiten Kammer 5 und öffnet das Auslaßende der ersten Kammer 4, so daß der Auslaß 8 in der zweiten Stellung mit der ersten Kammer 4 kommuniziert. Hierdurch ergibt sich folgende Abgasströmung: Das Abgas tritt durch den Einlaß 7 in die erste Kammer 4 ein, kann aufgrund der an ihrem Auslaßende versperrten zweiten Kammer 5 nicht durch die Überströmöffnungen 6 in diese eintreten, so daß das Abgas aus der ersten Kammer 4 durch den Auslaß 8 austritt. Es ist klar, daß die Kühlwirkung des Abgaskühlers 2 in dieser zweiten Stellung erheblich kleiner ist als in der zuvor beschriebenen ersten Stellung der Umschalteinrichtung 9.

Bei der Ausführungsform gemäß den Fig. 3 und 4 erstreckt sich die Trennwand 3 bis in den Auslaß 8 hinein und teilt, insbesondere halbiert, im Inneren des Auslaßes 8 den durchströmbaren Querschnitt. Am Auslaßende der Trennwand 3 ist wieder eine Umschalteinrichtung 9 im Auslaß 8 angeordnet. Bei dieser Ausführungsform weist die Umschalteinrichtung 9 eine Klappenanordnung mit einer ersten Klappe 12 und einer zweiten Klappe 13 auf, die etwa um 90° zueinander versetzt angeordnet sind. Diese Klappenanordnung 12, 13 ist wieder um eine senkrecht zur Strömungsrichtung, hier senkrecht zur Zeichnungsebene, verlaufende Schwenkachse 11 schwenkbar gelagert und mit entsprechenden, nicht dargestellten Stellmitteln betätigbar. In Fig. 3 nimmt die Umschalteinrichtung 9 ihre erste Stellung ein, in der die erste Klappe 12 das Auslaßende der zweiten Kammer 5 öffnet, während die zweite Klappe 13 das Auslaßende der ersten Kammer 4 sperrt. Somit stellt sich eine Durchströmung der Überströmöffnungen 6 ein, so daß die Abgase bei starker Kühlwirkung aus der zweiten Kammer 5 durch den Auslaß 8 austreten.

In Fig. 4 ist die Umschalteinrichtung 9 in ihre zweite Stellung geschaltet, in der die erste Klappe 12 das Auslaßende der zweiten Kammer 5 sperrt, während die zweite Klappe 13 das Auslaßende der ersten Kammer 4 freigibt. Dementsprechend ergibt sich im Gehäuse 2 keine intensive Durchströmung der Überströmöffnungen 6, so daß die Abgasströmung vergleichsweise wenig gekühlt aus der zweiten Kammer 4 durch den Auslaß 8 austritt.

Es ist klar, daß auch die Umschalteinrichtung 9 der Fig. 3 und 4 grundsätzlich mit einer Klappe auskommen kann. Die Ausführung mit zwei Klappen 12, 13 hat jedoch den Vorteil, daß ein entsprechendes Stellglied nur einen relativ kleinen Verstellweg durchführen muß.

Desweiteren ist es zweckmäßig, wenn die Umschalteinrichtung 9 bei den Ausführungsformen der Fig. 2 bis 4 so ausgebildet ist, daß wenigstens eine Zwischenstellung einstellbar ist, die zwischen der ersten Stellung und der zweiten Stellung liegt, so daß der Auslaß 8 sowohl mit der ersten Kammer 4 als auch mit der zweiten Kammer 5 kommuniziert. In Abhängigkeit der jeweiligen Zwischenstellung ergibt sich dann eine mehr oder weniger starke Durchströmung der Überströmöffnungen 6 wodurch sich die Kühlleistung des Abgaskühlers 1 mehr oder weniger einstellen läßt.

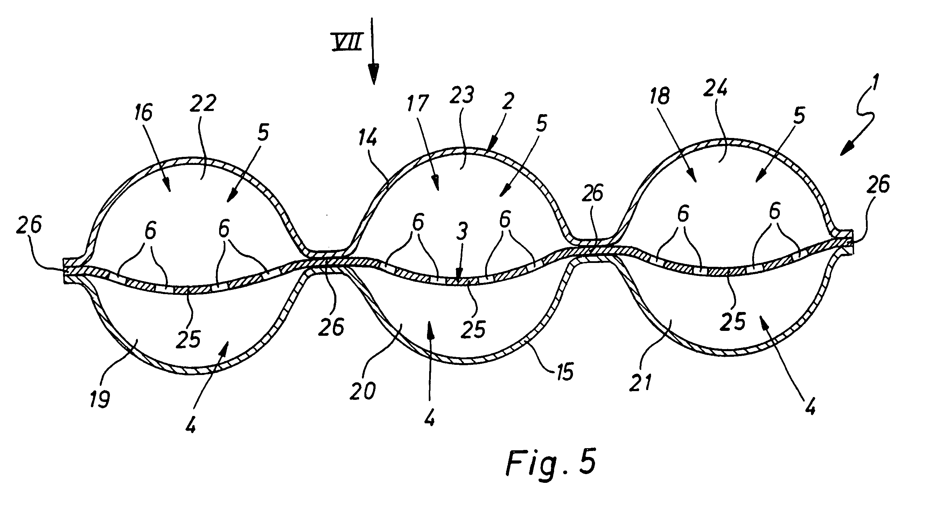

Entsprechend Fig. 5 wird das Gehäuse 2 bei einer bevorzugten Ausführungsform aus einer Oberschale 14, einer Unterschale 15 und einer Zwischenschale zusammengebaut, wobei die Zwischenschale die Trennwand 3 bildet. Der Zusammenbau erfolgt beispielsweise durch Schweißverfahren oder Falzverfahren. Die Herstellung des Gehäuses 2 ist dadurch relativ einfach.

Bei der in Fig. 5 gezeigten Ausführungsform sind im Gehäuse 2 außerdem mehrere, in Längsrichtung, also senkrecht zur Zeichnungsebene verlaufende Kanäle 16, 17, 18 ausgebildet. Dabei trennt die Trennwand 3 bzw. die Innenschale in jedem dieser Kanäle 16, 17, 18 einen ersten Teilkanal 19 bzw. 20 bzw. 21 von einem zweiten Teilkanal 22 bzw. 23 bzw. 24. In jedem der Kanäle 16, 17, 18 enthält die Trennwand 3 mindestens eine Überströmöffnung 6, so daß innerhalb der einzelnen Kanäle 16, 17, 18 deren Teilkanäle 19, 22 bzw. 20, 23 bzw. 21, 24 miteinander kommunizieren. Insgesamt bilden die ersten Teilkanäle 19, 20, 21 zusammen die erste Kammer 4 des Gehäuses 2, während die zweiten Teilkanäle 22, 23, 24 zusammen die zweite Kammer 5 bilden. Durch die Ausbildung separater Kanäle wird die zur Wärmeübertragung zur Verfügung stehende und von der Abgasströmung beaufschlagte Wandfläche vergrößert. Hierdurch erhöht sich die Kühlleistung des Abgaskühlers 1.

Die Innenschale 3 bzw. die Trennwand 3 weist hierbei drei in Längsrichtung verlaufende Trennabschnitte 25 und vier ebenfalls in Längsrichtung verlaufende Verbindungsabschnitte 26 auf. Dabei ist jeweils zwischen zwei benachbarten Verbindungsabschnitten 26 einer der Trennabschnitte 25 angeordnet. Im Bereich der Verbindungsabschnitte 26 liegen die Oberschale 14 und die Unterschale 15 an der Innenschale 3 an bzw. sind mit dieser verbunden, z.B. durch Laser-Schweißen. Im Unterschied dazu trennen die Trennabschnitte 25 in den Kanälen 16, 17, 18 die Teilkanäle voneinander, wobei die Trennabschnitte 25 die Überströmöffnungen 6 enthalten.

Hierdurch kann das Gehäuse 2 auch mit mehreren Kanälen 16, 17, 18 einen einfachen Aufbau aufweisen.

Gemäß Fig. 5 haben die Kanäle 16, 17, 18 im wesentlichen einen kreisförmigen Querschnitt, wobei grundsätzlich auch andere Querschnitte möglich sind. Wie aus Fig. 5 hervorgeht, ist die Innenschale 3 im Bereich ihrer Trennabschnitte 25 jeweils zur ersten Kammer 4 hin konvex gewölbt. Hierdurch ergibt sich eine Versteifung der Gesamtkonstruktion. Des weiteren ergibt sich dadurch für die zweite Kammer 5 ein durchströmter Querschnitt, der größer ist als der durchströmte Querschnitt der ersten Kammer 4.

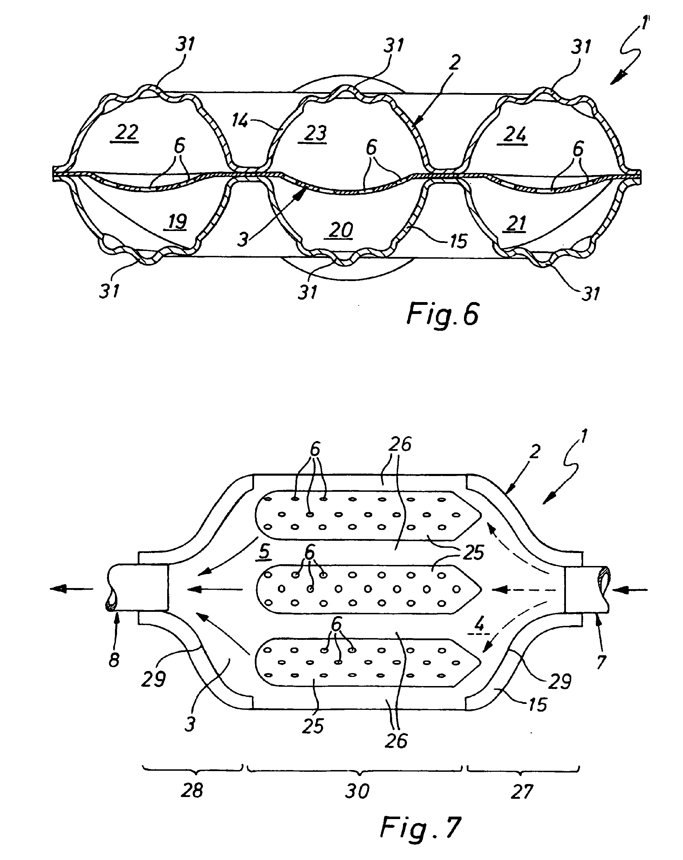

Entsprechend Fig. 6 kann das Gehäuse 2 an seinen Wandungen bzw. an seiner Oberschale 14 sowie an seiner Unterschale 15 nach außen gerichtete Bereiche aufweisen, die jeweils eine, die Oberfläche vergrößernde Struktur 31 besitzen. Beispielhaft ist in Fig. 6 diese Struktur 31 durch in Längsrichtung des Gehäuses 2 verlaufende Wellen gebildet. Durch diese Struktur 31 wird die vom durchströmenden Abgas beaufschlagte Oberfläche des Gehäuses 2 vergrößert, wodurch sich der Wärmeübergang zwischen Abgas und Abgaskühler 1 verbessert. Dementsprechend kann durch diese Strukturierung der Gehäusewandungen bzw. der Oberschale 14 und der Unterschale 15 die Kühlleistung des erfindungsgemäßen Abgaskühlers 1 verbessert werden.

In Fig. 7 ist eine Draufsicht auf den erfindungsg-emäßen Abgaskühler 1 wiedergegeben, die sich in Blickrichtung des Pfeils VII in Fig. 5 ergibt, wobei die Oberschale 14 weggelassen ist. Dementsprechend ist die zweite Kammer 5 sichtbar, während die erste Kammer 4 durch die Trennwand 3 bzw. die Innenschale 3 verdeckt ist. Dementsprechend strömt am Einlaß 7 Abgas in die verdeckte erste Kammer 4 ein und tritt bei entsprechender Stellung der gegebenenfalls vorhandenen Umschalteinrichtung 9 durch die Überströmöffnungen 6 in die sichtbare zweite Kammer 5 ein. Von dort aus tritt die gekühlte Abgasströmung durch den Auslaß 8 aus dem Gehäuse 2 aus. In Fig. 7 sind die durch die große Anzahl der Überströmöffnungen 6 perforierten Trennabschnitte 25 deutlich erkennbar.

Fig. 7 zeigt einen besonderen Aufbau des Gehäuses 2, bei dem die Trennwand 3 in einem durch eine geschweifte Klammer gekennzeichneten Einlaßbereich 27 und in einem ebenfalls durch eine geschweifte Klammer gekennzeichnet Auslaßbereich 28 jeweils über eine Schiebesitzlagerung 29 am Gehäuse 2 gelagert ist. Außerdem ist die Trennwand 3 in einem zwischen dem Einlaßbereich 27 und dem Auslaßbereich 28 angeordneten, durch eine geschweifte Klammer gekennzeichneten Mittelbereich 30 fest mit dem Gehäuse 2 verbunden, z.B. durch eine Schweißverbindung. Bei dem aus Oberschale 14, Innenschale 3 und Unterschale 15 zusammengebauten Gehäuse 2 erstrecken sich in diesem Mittelbereich 30 die außenliegenden Verbindungsabschnitte 26 bis zum Außenrand von Oberschale 14 und Unterschale 15, wodurch die Innenschale 3 in diesem Bereich einfach eingebunden werden kann. Durch diese Bauweise können im Einlaßbereich 27 und im Auslaßbereich 28 Ausgleichsbewegungen zwischen der Trennwand 3 und dem übrigen Gehäuse 2 stattfinden, ohne daß es zu kritischen Verspannungen kommt.

In diesem Mittelbereich 30 weisen die Kammern 4, 5 bzw. die Kanäle 16, 17, 18 jeweils konstante durchströmbare Querschnitte auf. Dementsprechend ist auch der Querschnitt des Gehäuses 2 im Mittelbereich 30 konstant.

Der Abgaskühler 1 ist beispielsweise im Abgasstrang einer Brennkraftmaschinen angeordnet. Bevorzugt wird eine Verwendung bei einer Brennkraftmaschine, die in einem Kraftfahrzeug angeordnet ist. Beispielsweise ist der Abgaskühler 1 an einer dem Fahrtwind ausgesetzten Stelle am Fahrzeug positioniert. Bei einer zweckmäßigen Weiterbildung kann außerdem ein Gebläse vorgesehen sein, das eine Kühlluftbeaufschlagung des Abgaskühlers 1 bewirkt bzw. verstärkt.

Die gesamte Dimensionierung des Abgaskühlers 1 bzw. seiner Kammern 4 und 5 ist vorzugsweise so gewählt, daß der durchströmbare Querschnitt der ersten Kammer 4 und der durchströmbare Querschnitt der zweiten Kammer 5 jeweils größer ist als der durchströmbare Querschnitt am Einlaß 7 sowie am Auslaß 8. Hierdurch ergibt sich eine Reduzierung der Strömungsgeschwindigkeit, die sich vorteilhaft auf die Kühlwirkung des Abgaskühlers 1 auswirkt.

## Patentansprüche

1. Abgaskühler, insbesondere für eine Brennkraftmaschine, vorzugsweise in einem Kraftfahrzeug,
- mit einem in Längsrichtung von Abgas durchströmbaren Gehäuse (2), in dem eine Trennwand (3) sich in Längsrichtung erstreckt und eine erste Kammer (4) von einer zweiten Kammer (5) trennt,
- mit einem Einlaß (7), der im Gehäuse (2) mit der ersten Kammer (4) kommuniziert und über den das Abgas in das Gehäuse (2) einströmt,
- mit einem Auslaß (8), der im Gehäuse (2) zumindest mit der zweiten Kammer (5) kommuniziert und über den das Abgas aus dem Gehäuse (2) ausströmt,
- **dadurch gekennzeichnet, daß** die Trennwand (3) mindestens eine Überströmöffnung (6) aufweist, durch welche die erste Kammer (4) mit der zweiten Kammer (5) kommuniziert.

2. Abgaskühler nach Anspruch 1,
**dadurch gekennzeichnet,**
**daß** im Auslaßbereich eine Umschalteinrichtung (9) angeordnet ist, die zwischen einer ersten Stellung, in welcher der Auslaß (8) mit der zweiten Kammer (5) kommuniziert, und einer zweiten Stellung verstellbar ist, in welcher der Auslaß (8) mit der ersten Kammer (4) kommuniziert.

3. Abgaskühler nach Anspruch 2,
**dadurch gekennzeichnet,**
**daß** die Umschalteinrichtung (9) so ausgebildet ist, daß wenigstens eine Zwischenstellung einstellbar ist, in welcher der Auslaß (8) mit beiden Kammern (4,5) mehr oder weniger kommuniziert.

4. Abgaskühler nach Anspruch 2 oder 3,
**dadurch gekennzeichnet,**
**daß** beide Kammern (4, 5) mit ihren Auslaßenden im oder am Auslaß (8) offen enden, wobei die Umschalteinrichtung (9) eine Klappenanordnung (12, 13) aufweist, welche in der ersten Stellung der Umschalteinrichtung (9) das Auslaßende der ersten Kammer (4) schließt und in der zweiten Stellung der Umschalteinrichtung (9) das Auslaßende der zweiten Kammer (5) schließt.

5. Abgaskühler nach einem der Ansprüche 1 bis 4,
**dadurch gekennzeichnet,**
**daß** das Gehäuse (2) aus einer Oberschale (14), einer Unterschale (15) und einer die Trennwand (3) bildenden Innenschale zusammengebaut ist.

6. Abgaskühler nach einem der Ansprüche 1 bis 5,
**dadurch gekennzeichnet,**
**daß** im Gehäuse (2) mehrere, in Längsrichtung verlaufende Kanäle (16, 17, 18) ausgebildet sind, wobei die Trennwand (3) in jedem der Kanäle (16, 17, 18) einen ersten Teilkanal (19, 20, 21) von einem zweiten Teilkanal (22, 23,24) trennt und mindestens eine Überströmöffnung (6) aufweist, durch welche die Teilkanäle des jeweiligen Kanals miteinander kommunizieren, wobei die ersten Teilkanäle die erste Kammer (4) und die zweiten Teilkanäle die zweite Kammer (5) bilden.

7. Abgaskühler nach Anspruch 5 und 6,
**dadurch gekennzeichnet,**
**daß** die Innenschale (3) mehrere in Längsrichtung verlaufende Trennabschnitte (25) und mehrere in Längsrichtung verlaufende Verbindungsabschnitte (26) aufweist, wobei zwischen zwei in Querrichtung benachbarten Verbindungsabschnitten (26) jeweils ein Trennabschnitt (25) angeordnet ist, wobei in den Verbindungsabschnitten (26) die Oberschale (14) und die Unterschale (15) an der Innenschale (3) anliegen und/oder mit dieser verbunden sind, wobei die Trennabschnitte (25) jeweils in einem der Kanäle (16, 17, 18) den ersten Teilkanal (19,20,21) vom zweiten Teilkanal (22, 23, 24) trennen und die mindestens eine Übertrittsöffnung (6) aufweisen.

8. Abgaskühler nach Anspruch 6 oder 7,
**dadurch gekennzeichnet,**
**daß** die Kanäle (16, 17, 18) im wesentlichen einen kreisförmigen Querschnitt aufweisen.

9. Abgaskühler nach einem der Ansprüche 1 bis 8,
**dadurch gekennzeichnet,**
**daß** eine Vielzahl von Überströmöffnungen (6) durch eine Perforation der Trennwand (3) oder mindestens eines Trennwandabschnitts (25) gebildet ist.

10. Abgaskühler nach einem der Ansprüche 1 bis 9,
**dadurch gekennzeichnet,**
**daß** die Trennwand (3) in einem Einlaßbereich (27) und in einem Auslaßbereich (28) jeweils über eine Schiebesitzlagerung (29) am Gehäuse (2) gelagert ist, wobei die Trennwand (3) in einem zwischen Einlaßbereich (27) und Auslaßbereich (28) angeordneten Mittelbereich (30) fest mit dem Gehäuse (2) verbunden ist.

11. Abgaskühler nach Anspruch 10,
**dadurch gekennzeichnet,**
**daß** die Kammern (4, 5) und/oder die Kanäle (16, 17, 18) im Mittelbereich (30) konstante Querschnitte aufweisen.

12. Abgaskühler nach einem der Ansprüche 1 bis 11,
**dadurch gekennzeichnet,**
**daß** die Querschnitte der Kammern (4, 5) jeweils größer sind als der Querschnitt des Einlaßes (7) und als der Querschnitt des Auslaßes (8).

13. Abgaskühler nach einem der Ansprüche 1 bis 12,
**dadurch gekennzeichnet,**
**daß** die Gehäuseswandungen oder daß die Oberschale (14) und/oder die Unterschale (15) zumindest bereichsweise eine die Oberfläche vergrößernde Struktur (31) aufweisen.

14. Abgaskühler nach Anspruch 13,
**dadurch gekennzeichnet,**
**daß** die Struktur (31) gewellt und/oder geriffelt und/oder plissiert ausgebildet ist.

## Claims

1. Exhaust-gas cooler, in particular for an internal combustion engine, preferably in a motor vehicle,
- having a housing (2) which can be traversed in the longitudinal direction by exhaust gas and in which a partition (3) extends in the longitudinal direction and divides a first chamber (4) from a second chamber (5),
- having an inlet (7) which, in the housing (2), communicates with the first chamber (4) and via which the exhaust gas flows into the housing (2),
- having an outlet (8) which, in the housing (2), communicates at least with the second chamber (5) and via which the exhaust gas flows out of the housing (2),
- **characterized in that** the partition (3) has at least one overflow opening (6) through which the first chamber (4) communicates with the second chamber (5).

2. Exhaust-gas cooler according to Claim 1,
**characterized**
**in that** a switchover device (9) is arranged in the outlet region, which switchover device (9) is adjustable between a first position, in which the outlet (8) communicates with the second chamber (5), and a second position, in which the outlet (8) communicates with the first chamber (4).

3. Exhaust-gas cooler according to Claim 2,
**characterized**
**in that** the switchover device (9) is designed such that at least one intermediate position can be set in which the outlet (8) communicates to a greater or lesser extent with both chambers (4, 5).

4. Exhaust-gas cooler according to Claim 2 or 3,
**characterized**
**in that** the two chambers (4, 5) end with their outlet ends open in or at the outlet (8), with the switchover device (9) having a flap arrangement (12, 13) which, in the first position of the switchover device (9), closes off the outlet end of the first chamber (4) and, in the second position of the switchover device (9), closes off the outlet end of the second chamber (5).

5. Exhaust-gas cooler according to one of Claims 1 to 4,
**characterized**
**in that** the housing (2) is assembled from an upper shell (14), a lower shell (15) and an inner shell which forms the partition (3).

6. Exhaust-gas cooler according to one of Claims 1 to 5,
**characterized**
**in that** a plurality of ducts (16, 17, 18) which run in the longitudinal direction are formed in the housing (2), wherein the partition (3), in each of the ducts (16, 17, 18), divides a first part-duct (19, 20, 21) from a second part-duct (22, 23, 24) and has at least one overflow opening (6) through which the part-ducts of the respective duct communicate with one another, with the first part-ducts forming the first chamber (4) and the second part-ducts forming the second chamber (5).

7. Exhaust-gas cooler according to Claim 5 and 6,
**characterized**
**in that** the inner shell (3) has a plurality of separating sections (25) which run in the longitudinal direction and a plurality of connecting sections (26) which run in the longitudinal direction, with in each case one separating section (25) being arranged between two connecting sections (26) which are adjacent in the transverse direction, with the upper shell (14) and the lower shell (15) bearing against and/or being connected to the inner shell (3) in the connecting sections (26), wherein the separating sections (25), in each case in one of the ducts (16, 17, 18), separate the first part-duct (19, 20, 21) from the second part-duct (22, 23, 24) and have the at least one overflow opening (6).

8. Exhaust-gas cooler according to Claim 6 or 7,
**characterized**
**in that** the ducts (16, 17, 18) have a substantially circular cross section.

9. Exhaust-gas cooler according to one of Claims 1 to 8,
**characterized**
**in that** a plurality of overflow openings (6) is formed by a perforation of the partition (3) or of at least one partition section (25).

10. Exhaust-gas cooler according to one of Claims 1 to 9,
**characterized**
**in that** the partition (3), in an inlet region (27) and in an outlet region (28), is mounted in the housing (2) in each case by means of a sliding-fit mounting (29), with the partition (3) being fixedly connected to the housing (2) in a central region (30) which is arranged between the inlet region (27) and the outlet region (28).

11. Exhaust-gas cooler according to Claim 10,
**characterized**
**in that** the chambers (4, 5) and/or the ducts (16, 17, 18) have constant cross sections in the central region (30).

12. Exhaust-gas cooler according to one of Claims 1 to 11,
**characterized**
**in that** the cross sections of the chambers (4, 5) are in each case larger than the cross section of the inlet (7) and than the cross section of the outlet (8).

13. Exhaust-gas cooler according to one of Claims 1 to 12,
**characterized**
**in that** the housing walls or in that the upper shell (14) and/or the lower shell (15) have, at least in regions, a structure (31) which enlarges the surface area.

14. Exhaust-gas cooler according to Claim 13,
**characterized**
**in that** the structure (31) is of corrugated and/or serrated and/or pleated design.

## Revendications

1. Refroidisseur de gaz d'échappement, en particulier pour un moteur à combustion interne, de préférence dans un véhicule automobile, comprenant :
- un boîtier (2) pouvant être parcouru dans la direction longitudinale par du gaz d'échappement, dans lequel une paroi de séparation (3) s'étend dans la direction longitudinale et sépare une première chambre (4) d'une deuxième chambre (5),
- une entrée (7) qui communique dans le boîtier (2) avec la première chambre (4) et par le biais de laquelle le gaz d'échappement afflue dans le boîtier (2),
- une sortie (8), qui communique dans le boîtier (2) au moins avec la deuxième chambre (5) et par le biais de laquelle le gaz d'échappement sort du boîtier (2),
**caractérisé en ce que** la paroi de séparation (3) présente une ouverture de débordement (6) par laquelle la première chambre (4) communique avec la deuxième chambre (5).

2. Refroidisseur de gaz d'échappement selon la revendication 1,
**caractérisé en ce**
**qu'**un dispositif de commutation (9) est prévu dans la région de sortie, lequel peut être réglé entre une première position dans laquelle la sortie (8) communique avec la deuxième chambre (5), et une deuxième position dans laquelle la sortie (8) communique avec la première chambre (4).

3. Refroidisseur de gaz d'échappement selon la revendication 2,
**caractérisé en ce que**
le dispositif de commutation (9) est réalisé de telle sorte qu'au moins une position intermédiaire puisse être ajustée, dans laquelle la sortie (8) communique plus ou moins avec les deux chambres (4, 5) .

4. Refroidisseur de gaz d'échappement selon la revendication 2 ou 3,
**caractérisé en ce que**
les deux chambres (4, 5) sont ouvertes par leurs extrémités de sortie dans ou au niveau de la sortie (8), le dispositif de commutation (9) présentant un agencement de volet (12, 13) qui, dans la première position du dispositif de commutation (9), ferme l'extrémité de sortie de la première chambre (4), et dans la deuxième position du dispositif de commutation (9), ferme l'extrémité de sortie de la deuxième chambre (5).

5. Refroidisseur de gaz d'échappement selon l'une quelconque des revendications 1 à 4,
**caractérisé en ce que**
le boîtier (2) est constitué d'une coque supérieure (14), d'une coque inférieure (15) et d'une coque interne formant la paroi de séparation (3) .

6. Refroidisseur de gaz d'échappement selon l'une quelconque des revendications 1 à 5,
**caractérisé en ce que**
plusieurs canaux (16, 17, 18) s'étendant dans la direction longitudinale sont réalisés dans le boîtier (2), la paroi de séparation (3) dans chacun des canaux (16, 17, 18) séparant un premier canal partiel (19, 20, 21) d'un deuxième canal partiel (22, 23, 24) et présentant au moins une ouverture de débordement (6) par laquelle les canaux partiels de chaque canal communiquent les uns avec les autres, les premiers canaux partiels formant la première chambre (4) et les deuxièmes canaux partiels formant la deuxième chambre (5).

7. Refroidisseur de gaz d'échappement selon les revendications 5 et 6,
**caractérisé en ce que**
la coque interne (3) présente plusieurs sections de séparation (25) s'étendant dans la direction longitudinale et plusieurs sections de connexion (26) s'étendant dans la direction longitudinale, une section de séparation (25) étant disposée à chaque fois entre deux sections de connexion (26) adjacentes dans la direction transversale, la coque supérieure (14) et la coque inférieure (15) s'appliquant contre la coque interne (3) dans les sections de connexion (26), et/ou étant connectées à celle-ci, les sections de séparation (25) séparant à chaque fois le premier canal partiel (19, 20, 21) du deuxième canal partiel (22, 23, 24) dans l'un des canaux (16, 17, 18), et présentant l'au moins une ouverture de débordement (6).

8. Refroidisseur de gaz d'échappement selon la revendication 6 ou 7,
**caractérisé en ce que**
les canaux (16, 17, 18) présentent essentiellement une section transversale circulaire.

9. Refroidisseur de gaz d'échappement selon l'une quelconque des revendications 1 à 8,
**caractérisé en ce qu'**
une pluralité d'ouvertures de débordement (6) est formée par une perforation de la paroi de séparation (3) ou d'au moins une section de la paroi de séparation (25).

10. Refroidisseur de gaz d'échappement selon l'une quelconque des revendications 1 à 9,
**caractérisé en ce que**
la paroi de séparation (3) est montée dans une région d'entrée (27) et dans une région de sortie (28) à chaque fois par le biais d'un support à siège coulissant (29) sur le boîtier (2), la paroi de séparation (3) étant fixement connectée au boîtier (2) dans une région centrale (30) disposée entre la région d'entrée (27) et la région de sortie (28).

11. Refroidisseur de gaz d'échappement selon la revendication 10,
**caractérisé en ce que**
les chambres (4, 5) et/ou les canaux (16, 17, 18) présentent des sections transversales constantes dans la région centrale (30).

12. Refroidisseur de gaz d'échappement selon l'une quelconque des revendications 1 à 11,
**caractérisé en ce que**
les sections transversales des chambres (4, 5) sont à chaque fois supérieures à la section transversale de l'entrée (7) et à la section transversale de la sortie (8).

13. Refroidisseur de gaz d'échappement selon l'une quelconque des revendications 1 à 12,
**caractérisé en ce que**
les parois du boîtier ou la coque supérieure (14) et/ou la coque inférieure (15) présentent au moins en partie une structure (31) augmentant la surface.

14. Refroidisseur de gaz d'échappement selon la revendication 13,
**caractérisé en ce que**
la structure (31) est ondulée et/ou rainurée et/ou plissée.
